# EUROPEAN PATENT APPLICATION

(11) **EP 4 044 376 A1**
(43) Date of publication of application: **17.08.2022**
(21) Application number: 20899952.4
(22) Date of filing: 25.11.2020
(51) Int. Cl.: H01R 4/66, B60M 5/00

(54) **SHAFT END GROUNDING DEVICE**

(30) Priority: 10.12.2019 CN 201911258753
(71) Applicant: CRRC Zhuzhou Locomotive Co., Ltd, Zhuzhou, Hunan 412001 (CN)
(72) Inventor: ZHANG, Yanlin, Zhuzhou, Hunan 412001 (CN); PENG, Baolin, Zhuzhou, Hunan 412001 (CN); LIN, Ping, Zhuzhou, Hunan 412001 (CN); CHEN, Zhenbao, Zhuzhou, Hunan 412001 (CN); GUO, Jinyu, Zhuzhou, Hunan 412001 (CN)
(74) Representative: Kramer Barske Schmidtchen Patentanwälte PartG mbB
(86) International application number: PCT/CN2020/131278
(87) International publication number: WO 2021/115120

(57) **Abstract**

An axle end grounding device, comprising a brush holder assembly (6), the brush holder assembly (6) is mounted in a middle hole of a flange mounting base (4) in an electrical isolation manner, and one end of the brush holder assembly (6) is fixedly connected to one end of the flange mounting base (4) by a second bolt (5); the other end of the brush holder assembly (6) is mounted in the middle hole of the other end of the flange mounting base (4) in a fitting manner by means of one end of a positioning ring (9), the other end of the positioning ring (9) is mounted in an axle box (1) in a fitting manner, the positioning ring (9) is axially limited by an insulating block (10), and the flange mounting base (4) is fixedly mounted on the axle box (1) by a first bolt (2) and a metal gasket (16). The device effectively overcomes the hidden danger of driving accidents caused by falling of the brush holder assembly due to the fact that a non-metal insulating member is easy to deform in use during the mounting of the brush holder assembly, and the reliability and safety of the axle end grounding device are ensured.

## Description

### Field of the Invention

The present invention relates to a current receiving component of a rail transit vehicle, in particular to an axle end grounding device suitable for extreme working conditions.

### Background of the Invention

An axle end grounding device for rail transit vehicles is used to prevent electric corrosion of axle box bearings, improve the electrical conductivity of rail vehicles, and realize main circuit current return grounding of rail vehicles. The axle end grounding device is a device on an axle, it works in extremely harsh environments and bears the highest level of vibration impact on a vehicle, and its practical application conditions are far higher than product test standards. In order to meet the functional properties of the axle end grounding device, the axle end grounding device must be insulated from an axle box by insulating parts, so there is a tight connection between metal parts and non-metallic insulating parts in structure.

For example, the axle end grounding device for subway vehicles disclosed in Chinese patent CN207466417U is directly installed on an axle box only by fastening bolts and non-metallic insulating parts (insulating supports or insulating pads). Because the axle end grounding device is usually a metal part that greatly differs from a non-metallic insulating part in mechanical strength, the non-metallic insulating part will first deform under the fastening torque of a fastening bolt, the fastening torque will gradually attenuate, the pre-tightening force of the fastening bolt decreases, and the fastening bolt may loosen under the load and strong impact vibration in the absence of other anti-loosening measures, resulting in the risks of falling and failure (especially falling on a rail or turnout) of the existing axle end grounding device in actual application, which will pose a greater risk to the safe operation of trains.

### Summary of the Invention

The technical problem to be solved by the present invention is to provide an axle end grounding device with high safety and reliability in response to the deficiencies of falling and failure of the existing axle end grounding device.

In order to solve the above technical problem, the present invention adopts the following technical solution: an axle end grounding device includes a brush holder assembly and a flange mounting base, the brush holder assembly is mounted in a middle hole of the flange mounting base in an electrical isolation manner, and one end of the brush holder assembly is fixedly connected to one end of the flange mounting base by a second bolt; the other end of the brush holder assembly is mounted in the middle hole of the other end of the flange mounting base in a fitting manner by means of one end of a positioning ring, the other end of the positioning ring is mounted in an axle box in a fitting manner, the positioning ring is axially limited by an insulating block, and the flange mounting base is fixedly mounted on the axle box by a first bolt and a metal gasket.

During the assembly of the present invention, the brush holder assembly is first assembled in the middle hole of the flange mounting base, then the brush holder assembly is fixed in the flange mounting base by the second bolt and the positioning ring, and the flange mounting base is rigidly connected to the axle box by the first bolt and the metal gasket, thereby achieving double fixation. Because the metal gasket will not deform due to long-term operation in the rigid connection, the fastening torque of the first bolt remains unchanged, and the flange mounting base can be stably mounted on the axle box. Even if the fastening of the second bolt fails, because the entire brush holder assembly is fixedly assembled in the middle hole of the flange mounting base, the brush holder assembly will not be disengaged from the flange mounting base, thereby ensuring the high safety and high reliability of the axle end grounding device. During the running process of a vehicle, the positioning ring bears the vibration impact, and the second bolt only achieves connection and does not bear shearing force, which further ensures the high safety and high reliability of the axle end grounding device.

In order to realize the insulation isolation between the brush holder assembly and the flange mounting base, an insulating support is arranged between the flange mounting base and the brush holder assembly, and an insulating pad is arranged between the second bolt and the flange mounting base.

Specifically, the brush holder assembly includes a brush holder, a carbon brush is supported and mounted in the brush holder by a constant force spring, one end of a current guide wire of the carbon brush is fixedly connected to the brush holder, and the brush holder is fixedly connected to a current guide bar connected to a vehicle current return circuit. During operation, current is introduced from the current guide bar, and is connected to the ground via the brush holder, the carbon brushes, an axle, a wheel, and a rail in sequence to achieve grounding current return.

In order to ensure the sealing and waterproofing of the carbon brushes, the outer end of the brush holder is sealed by an end cover, a sealing ring is arranged between the end cover and a mounting surface of the brush holder, meanwhile, and between the insulating support and the flange mounting base, and between the insulating support and the mounting surface of the brush holder, and between the flange mounting base and a mounting surface of the axle box.

The axle end grounding device of the present invention not only realizes the function of grounding current return, but also structurally avoids the possibility of disengagement of the brush holder assembly, and ensures reliable grounding current return under extreme working conditions, thereby improving the reliability and safety of the axle end grounding device.

### Brief Description of the Drawings

In order to describe the technical solutions in the embodiments of the present invention or in the prior art more clearly, the following briefly introduces the accompanying drawings required in the description of the embodiments or the prior art. Apparently, the accompanying drawings in the following description show some embodiments of the present invention, and a person of ordinary skill in the art may still derive other drawings from these drawings without any creative effort.
FIG. 1 is a schematic diagram of an installation structure of an axle end grounding device of the present invention.
FIG. 2 is a schematic front structure diagram of the axle end grounding device in FIG. 1.
FIG. 3 is a left view of FIG. 2.
FIG. 4 is a right view of FIG. 2.
FIG. 5 is a cross-sectional view taken along line A-A in FIG. 4 after a current guide bar is removed.
FIG. 6 is a schematic front structure diagram of a brush holder assembly in FIG. 2.
FIG. 7 is a left view of FIG. 6.
FIG. 8 is a cross-sectional view taken along line A-A in FIG. 7.
FIG. 9 is a right view of FIG. 6.
FIG. 10 is an exploded view of the axle end grounding device of the present invention.

In the figures: 1, axle box; 2, first bolt; 3, sealing ring; 4, flange mounting base; 5, second bolt; 6, brush holder assembly; 7, current guide bar; 8, end cover; 9, positioning ring; 10, insulating block; 11, brush holder; 12, carbon brush; 13, constant force spring; 14, insulating support; 15, insulating pad; 16, metal gasket.

### Detailed Description of the Embodiments

The present invention will be further described below with reference to specific preferred embodiments, but the scope of protection of the present invention is not limited thereby.

For the convenience of description, the relative positional relationships of components, such as upper, lower, left, and right, are described according to the layout direction of the accompanying drawings in the specification, and do not limit the structure of this patent.

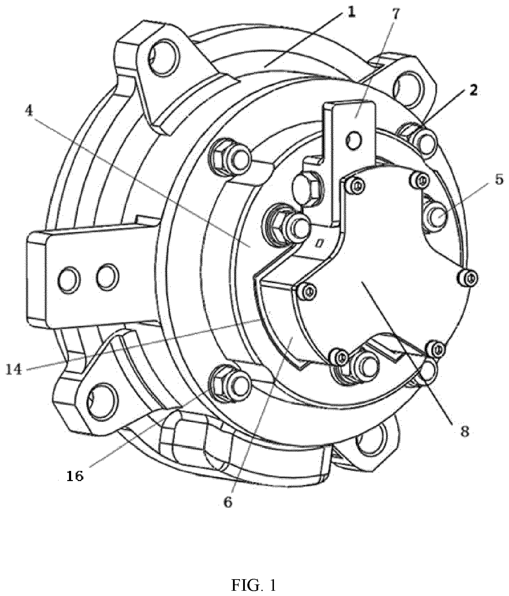

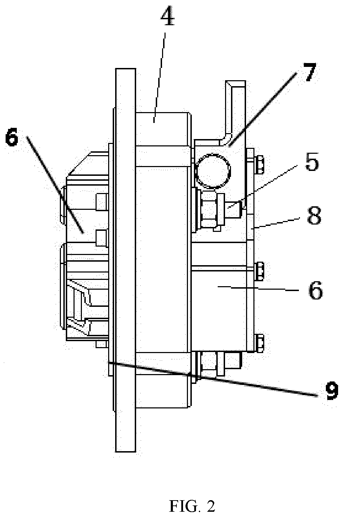

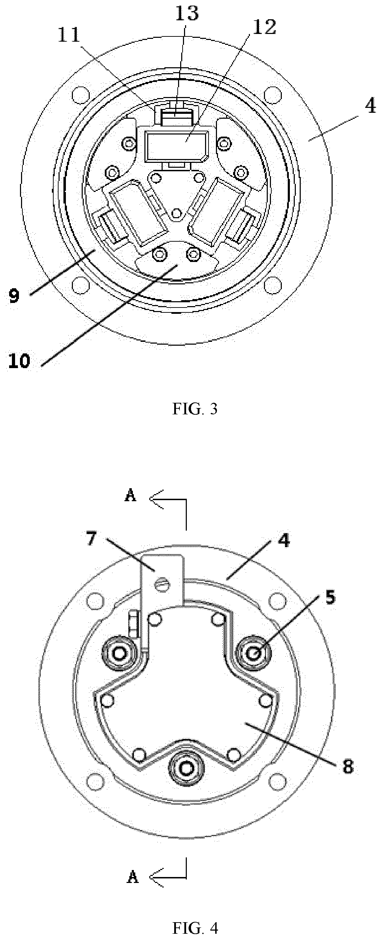

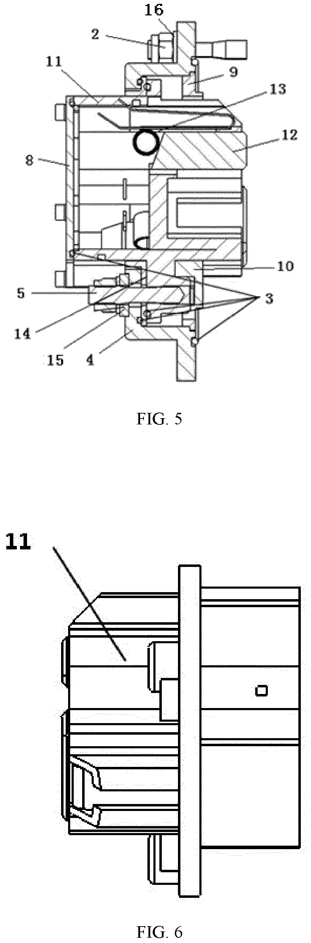

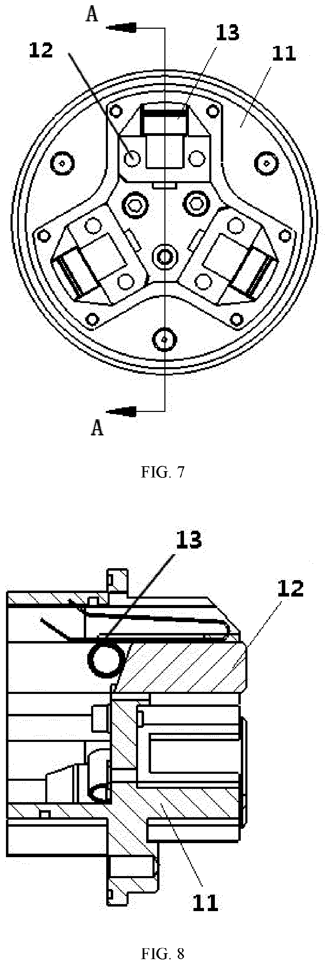

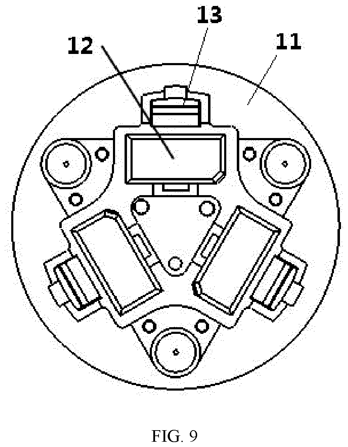

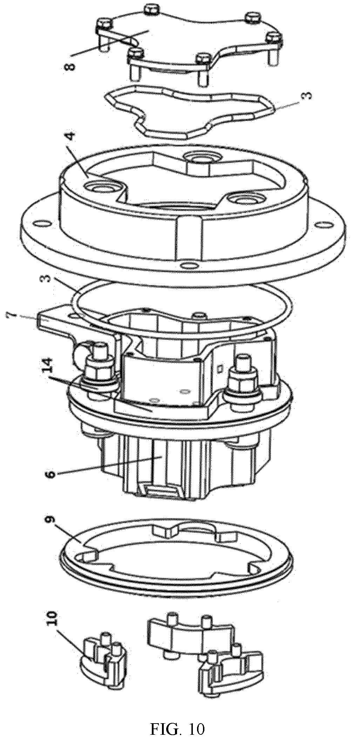

As shown in FIGS. 1 to 10, an axle end grounding device of the present invention mainly consists of sealing rings 3, a flange mounting base 4, a second bolt 5, a brush holder assembly 6, a current guide bar 7, an end cover 8, a positioning ring 9, insulating blocks 10, an insulating support 14, an insulating pad 15, and a metal gasket 16.

The flange mounting base 4 is mounted and fixed on an axle box 1 by a first bolt 2 and the metal gasket 16. Because the metal gasket 16 will not deform due to long-term operation in rigid connection, the fastening torque of the first bolt 2 remains unchanged, and the flange mounting base 4 can be stably mounted on the axle box 1.

The brush holder assembly 6 is assembled in a middle hole of the flange mounting base 4, one end of the flange mounting base 4 is fixedly connected to one end of the brush holder assembly 6 by the second bolt 5, the other end of the flange mounting base 4 clamps and fixes the other end of the brush holder assembly 6 by means of one end of the positioning ring 9, and the other end of the positioning ring 9 is fixedly connected to an inner cavity of the axle box 1. During the running process of a vehicle, the positioning ring 9 bears the vibration impact of the axle end grounding device, so that the second bolt 5 only achieves connection and does not bear shearing force. The insulating blocks 10 are fastened to the brush holder assembly 6, and the insulating blocks 10 axially confine the positioning ring 9 in the middle hole of the flange mounting base 4, so that the insulating blocks 10 can not only restrict the disengagement of the positioning ring 9, but also realize the insulation between the positioning ring 9 and the brush holder assembly 6. The arrangement of the positioning ring 9 and the insulating blocks 10 ensures the integrity of the axle end grounding device during delivery.

The flange mounting base 4 and the brush holder assembly 6 are insulated by the insulating support 14, and the second bolt 5 and the flange mounting base 4 are insulated by the insulating pad 15. The insulating pad 15 is a non-metallic part, which may deform under long-term operation in a rigid connection, resulting in a decrease in the fastening torque of the second bolt 5, thereby causing the fastening failure of the second bolt 5. However, because the entire brush holder assembly 6 is assembled in the middle hole of the flange mounting base 4, even if the second bolt 5 fails, the brush holder assembly 6 will not be disengaged, and there will be no safety hazard.

The brush holder assembly 6 includes a brush holder 11, three carbon brushes 12 are supported and mounted in the brush holder 11 by constant force springs 13, a current guide bar 7 is fixedly connected to the outside of the brush holder 11 by bolts, and current guide wires of the carbon brushes 12 are electrically connected to the inside of the brush holder 11. During operation, the current guide bar 7 is connected to a vehicle current return circuit, so that current flows from the current guide bar 7 into the brush holder 11, then flows into the carbon brushes 12 via the brush holder 11, and finally flows into an axle, a wheel and a rail in sequence via the carbon brushes 12 to achieve grounding current return. The outer ends of the carbon brushes 12 (the outer end of the brush holder 11) are sealed by the end cover 8.

In order to ensure the sealing and waterproofing of the carbon brushes 12, the outer end of the brush holder 11 is sealed by the end cover 8, a sealing ring 3 is arranged between the end cover 8 and a mounting surface of the brush holder 11, meanwhile, the sealing ring 3 is also respectively arranged between the insulating support 14 and the flange mounting base 4 and between the insulating support 14 and the mounting surface of the brush holder 11, and the sealing ring 3 is also arranged between the flange mounting base 4 and a mounting surface of the axle box 1.

The forgoing descriptions are only preferred embodiments of the present application, and do not limit the present application in any form. Although the present application is disclosed above with the preferred embodiments, the present application is not limited thereto. Some variations or modifications made by any skilled person familiar with the art using the disclosed technical contents without departing from the scope of the technical solution of the present application are equivalent to the embodiments, and all fall within the scope of the technical solution.

## Claims

1. An axle end grounding device, comprising a brush holder assembly (6) and a flange mounting base, wherein the brush holder assembly is mounted in a middle hole of the flange mounting base (4) in an electrical isolation manner, and one end of the brush holder assembly is fixedly connected to one end of the flange mounting base by a second bolt (5); the other end of the brush holder assembly is mounted in the middle hole of the other end of the flange mounting base in a fitting manner by means of one end of a positioning ring (9), the other end of the positioning ring is mounted in an axle box (1) in a fitting manner, the positioning ring (9) is axially limited by an insulating block (10), and the flange mounting base is fixedly mounted on the axle box (1) by a first bolt (2) and a metal gasket.

2. The axle end grounding device according to claim 1, wherein an insulating support (14) is arranged between the flange mounting base and the brush holder assembly, and an insulating pad (15) is arranged between the second bolt and the flange mounting base.

3. The axle end grounding device according to claim 1, wherein the brush holder assembly comprises a brush holder (11), a carbon brush (12) is supported and mounted in the brush holder by a constant force spring (13), one end of a current guide wire of the carbon brush (12) is fixedly connected to the brush holder, and the brush holder is fixedly connected to a current guide bar (7) connected to a vehicle current return circuit.

4. The axle end grounding device according to claim 3, wherein the outer end of the brush holder (11) is sealed by an end cover (8), and a sealing ring is arranged between the brush holder and the end cover.

5. The axle end grounding device according to claim 2, wherein a sealing ring is respectively arranged between the insulating support and the flange mounting base and between the insulating support and a mounting surface of the brush holder, and between the flange mounting base and a mounting surface of the axle box.
